# EUROPÄISCHE PATENTSCHRIFT

(11) **EP 1 894 399 B1**
(45) Veröffentlichungstag und Bekanntmachung des Hinweises auf die Patenterteilung: **10.09.2014**
(21) Anmeldenummer: 06708274.3
(22) Anmeldetag: 15.02.2006
(51) Int. Cl.: H04M 3/42, H04M 3/22, H04M 3/38

(54) **ADMINISTRATION VON COMPUTER-TELEFONIE ANWENDUNGEN, DIE AN EINER NEBENSTELLENANLAGE ÜBER EIN LOKALES NETZ ANGESCHLOSSEN SIND**
ADMINISTRATION OF COMPUTER TELEPHONY APPLICATIONS THAT ARE CONNECTED TO A PRIVATE BRANCH EXCHANGE VIA A LOCAL NETWORK
GESTION D'APPLICATIONS TELEPHONIQUES INFORMATISEES, RELIEES A UNE INSTALLATION SUPPLEMENTAIRE PAR UN RESEAU LOCAL

(30) Priorität: 30.03.2005 DE 102005014522
(43) Veröffentlichungstag der Anmeldung: 05.03.2008
(73) Patentinhaber: Unify GmbH & Co. KG, 81379 München (DE)
(72) Erfinder: SCHOLL, Gregor, 44265 Dortmund (DE)
(74) Vertreter: Fritzsche, Thomas
(86) Internationale Anmeldenummer: PCT/EP2006/050938
(87) Internationale Veröffentlichungsnummer: WO 2006/103141

(56) Entgegenhaltungen:
- EP-A- 1 089 530
- EP-A- 1 189 415
- DE-A1- 19 910 468
- DE-C1- 19 917 383

## Beschreibung

An Vermittlungsanlagen, beispielsweise Nebenstellenanlagen sind neben den analogen und digitalen Telefonen zunehmend Computer, insbesondere Personalcomputer mit Telefonfunktion oder IP Phones, über ein lokales Netzwerk LAN angeschlossen. Derartige Kommunikationssysteme sind bekannt und wurden beispielsweise durch die veröffentlichte Patentanmeldung EP 1 189 415 offenbart. Für das Importieren von Daten bzw. Informationen in die Nebenstellenanlagen oder in das lokale Netzwerk, insbesondere ein lokales IP- Netz im Sinne einer Verwaltung dieser Netze sind jeweils unterschiedliche Zugriffsprozeduren vorgesehen.

Für den Zugriff in ein lokales Netzwerk ist ein qualifizierter Zugang vorgesehen, bei dem mit Hilfe eines Domain Controllers sowohl die Authentisierung als auch der Import der Daten bewerkstelligt wird. Die Authentisierung ist erforderlich, da nur authentisierten Benutzern erlaubt ist das Netzwerk zu benutzen, insbesondere zu administrieren. Weitere Schutzmassnahmen sind beispielsweise Firewalls und SSL - Secure Socket Layer. SSL ist ein Protokoll zur verschlüsselten Übertragung von Daten.

Um Daten bzw. Informationen in eine Nebenstellenanlage zu importieren, um diese beispielsweise zu administrieren, sind spezielle Schnittstellen vorgesehen, die ebenfalls mit speziellen Schutzmechanismen ausgestattet sind. Hierbei wird insbesondere mit Authentisierungsprozeduren - beispielsweise Hipath Licensing - sichergestellt, dass nur autorisierte Benutzer, speziell Administratoren, Daten in die Nebenstellenanlage importieren und die betroffenen Komponenten administrieren können.

Die Administration bzw. Konfiguration des lokalen Netzwerks LAN und der Nebenstellenanlage erfolgt über verschiedene Schnittstellen und damit verbundene unterschiedliche Schutz-mechanismen beispielsweise Authentisierung und Datenübertragungsprozeduren. Dies bedeutet, dass die zu importierenden Daten mehrfach eingegeben und abgeglichen werden müssen.

Die der Erfindung zugrunde liegende Aufgabe ist darin zu sehen, das Importieren von Daten in Vermittlungsanlagen mit lokalem Netzwerk zu verbessert. Die Aufgabe wird durch die Merkmale des Patentanspruchs 1 und 10 gelöst.

Der wesentliche Aspekt des erfindungsgemäßen Verfahrens bzw. Kommunikationssystems besteht darin, dass von einem Endgerät über eine Schnittstelle für Telefonanwendungen (TAPI) eine Kommunikationsbeziehung zu einer endgerätespezifischen Anpassung für Telefonanwendungen (TAPI Service Provider) hergestellt wird, wobei die Berechtigung zum Importieren von Daten verifiziert wird. Anschließend werden die Daten über die Kommunikationsbeziehung zu betroffenen Applikationen oder betroffenen Diensten des Netzes importiert. Ein Vorteil der Erfindung ist darin zu sehen, dass das Importieren von Daten in eine Windows-Domäne eines lokalen Netzes von einem beliebigen Endgerät der Vermittlungsanlage durchgeführt werden kann. Ein weiterer Vorteil besteht darin, dass hierbei keine speziellen Berechtigungen erforderlich sind, da durch die Schutz-/ Lizenzberechtigungen, die zwischen dem Endgerät und der Vermittlungsanlage ausgetauscht werden, ein vorzügliche Schutz gegen unbefugten Zugriff auf die Vermittlungsanlage und dem damit verbundenen lokalen Netz gewährleistet ist. Vorteilhaft wird zum Zugriff auf die Vermittlungsanlage und Domain Controller (DC) nur ein Berechtigungsprüfungsverfahren, nämlich das der Vermittlungsanlage (PBX) benötigt.

Vorteilhafte Weiterbildungen des Verfahrens sind den Unteransprüchen zu entnehmen.

Im Folgenden wird die Erfindung anhand von zwei zeichnerischen Darstellungen erläutert. Dabei zeigen
Figur 1 eine Topologie, in der die Erfindung realisierbar ist,
Figur 2 eine Funktionsübersicht der Erfindung.

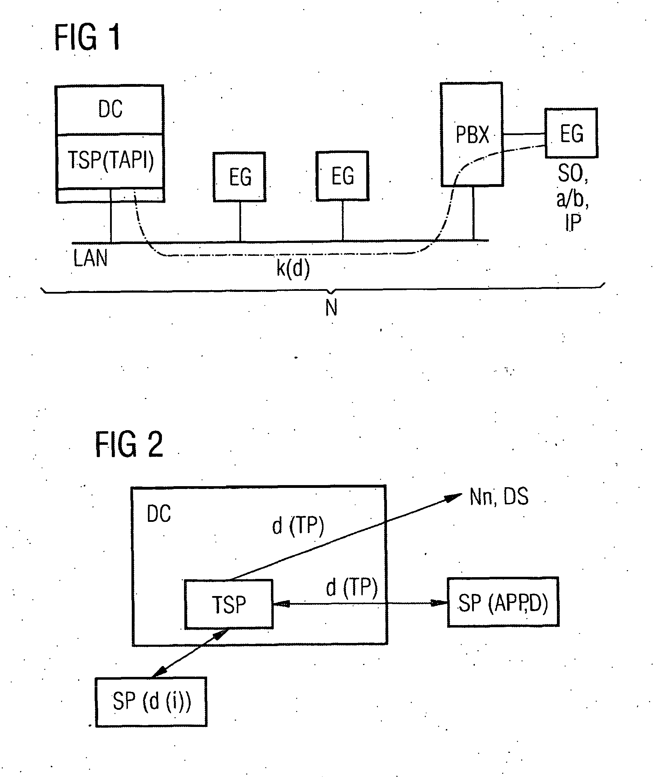

Figur 1 zeigt eine Netztopologie, in der das erfindungsgemäße Verfahren eingesetzt werden kann. An eine Vermittlungseinrichtung, im Ausführungsbeispiel eine Nebenstellenanlage PBX und im weiteren mit PBX bezeichnet, sind Endgeräte EG angeschlossen - in der Figur 1 ist beispielhaft ein Endgerät EG dargestellt -, wobei die Endgeräte über eine analoge a/b-Schnittstelle a/b, eine digitale ISDN- Schnittstelle SO oder über das Internet IP einschließlich der jeweiligen Signalisierungsprozeduren an die PBX angeschlossen sind. Die PBX ist des weiteren über eine Schnittstelle mit einem lokalen Netz LAN verbunden - im weiteren mit LAN bezeichnet -, an das weitere Endgeräte EG anschließbar sind. Zusätzlich ist das LAN auf einen Domain Controller DC geführt, in dem ein TAPI Service Provider TSP - im Weiteren mit TSP bezeichnet - vorgesehen ist.

Bei TAPI handelt es sich um ein Application Programming Interface (API) für Telefonanwendungen (T), insbesondere für windowsbasierte Personal Computer und LAN's. Ein TSP passt das Application Programming Interface TAPI an die jeweiligen endgerätespezifischen Eigenschaften an. Mit Hilfe des TSP werden die grundlegenden Telefonfunktionen zur Verbindungssignalisierung und weiterer telefonspezifischer Leistungsmerkmale gesteuert.

Ein Domain Controller DC verwaltet die Endgeräte EG des Netzwerks N. Mit dem Domain Controllers DC kann festgelegt werden, welche Endgeräte EG sich mit welchem Passwort anmelden dürfen, auf welche Dateien bzw. Netzwerkfreigaben sie Zugriff haben usw.

Erfindungsgemäß wird von einem Endgerät EG der PBX über die PBX eine Verbindung zum TSP aufgebaut. Hierzu wird von dem Endgerät eine vorgegebene Rufnummer gewählt, durch die der TSP identifiziert ist. Im Rahmen des Verbindungsaufbaus findet zwischen dem Endgerät und der PBX ein Lizenzschlüsselaustausch gemäß Hipath Licensing statt. Durch diesen Austausch der Lizenzschlüssel ist sichergestellt, dass nur berechtigte Nutzer einen Zugang zur PBX erreichen können. Aufgrund dieser Authentisierung des Endgerätes EG bzw. des Nutzers kann auf eine weitere Authentisierungsprozedur für den Zugriff auf den TSP verzichtet werden. Üblicherweise würde ein derartiger Zugriff auf eine Windows-Domäne nur mit weiteren umfangreichen Zugangsberechtigungsprozeduren möglich sein.

Nach der Authentisierung des Endgeräts EG bzw. des Nutzes werden über das Endgerät EG die zu importierenden Daten d an den TSP übermittelt und gespeichert.

In Figur 2 ist die Funktionsaufteilung des TSP bezogen auf die übermittelten Daten d dargestellt. Die übermittelten, zu importierenden Daten d stellen meist Konfigurationsdaten dar, die an bestimmte Applikationen AP oder Dienste D im Sinne einer Konfiguration dieser Applikationen AP oder Dienste D weitergeleitet bzw. übertragen werden. Hierzu ist in den Daten d eine Information i enthalten, die die Applikation AP bzw. den Dienst D angibt, an die die Daten d oder die in den Daten d enthaltene Datei oder enthaltenen Dateien zu übermitteln bzw. in diese zu importieren sind. Die Daten d bzw. die darin enthaltenen Dateien werden im Domain Controller DC in einem Speicher SP zwischengespeichert und anschließend oder zu ei-. nem vorgegebenen Zeitpunkt an die jeweiligen Applikationen AP bzw. Dienste weitergeleitet. Zusätzlich können die Daten d auch an andere Netze Nn oder andere Domainservices DS weitergeleitet werden. Das übermittlurigsprotokoll (TP) kann an die zu übertragenden Daten d bzw. Dateien angepasst werden.

Das erfindungsgemäße Verfahren bzw. Kommunikationssystem ist nicht auf das Ausführungsbeispiel beschränkt, sondern kann in allen Netzen eingesetzt werden, bei denen paketorientierte Netzkomponenten wie lokale Netz mit zeitmultiplexorientierten Netzkomponenten wie Telefon- Vermittlungseinrichtung zusammenarbeiten. Wesentlich ist hierbei, dass von einem Endgerät des Netzes eine Kommunikationsbeziehung zu einem TSP hergestellt wird, wobei die vorhandene Authentisierungsprozedur zwischen Endgerät und PBX vorteilhaft als Authentisierungsprozedur für den Zugang zu dem TSP genutzt wird. Hierdurch kann auf die üblichen Berechtigungsprozeduren in die Windows-Domäne TSP verzichtet werden und damit sowohl der prögramm-technische Aufwand als auch der Bedienungsaufwand für den Zugriff auf den TSP reduziert werden.

## Patentansprüche

1. Verfahren zum Importieren von Daten (d), die zu einer betroffenen Applikation (AP) oder einem betroffenen Dienst (D) einer paketorientierten Netzkomponente (LAN) importiert werden, bei dem ein Endgerät (EG) an eine zeitmultiplexorientierte Netzkomponente (PBX) angeschlossen ist, die mit der paket-orientierten Netzkomponente (LAN) verbunden ist, welche auf einen Controller (DC) für einen Zugriff auf eine endgerätespezifische Anpassung für Telefonanwendungen (TSP) geführt ist,
**dadurch gekennzeichnet, dass**
- von dem Endgerät (EG) über eine Schnittstelle für Telefonanwendungen (TAPI) eine Kommunikationsbeziehung (k) zu der endgerätespezifischen Anpassung für Telefonanwendungen (TSP) hergestellt wird, wobei die Berechtigung zum Importieren von Daten (d) dadurch verifiziert wird, dass eine zwischen dem Endgerät (EG) und der zeitmultiplexorientierten Netzkomponente (PBX) vorhandene Authentisierungsprozedur als Authentisierungsprozedur für den Zugang zu der endgerätespezifischen Anpassung für Telefonanwendungen (TSP) genutzt wird, und
- die Daten (d) über die Kommunikationsbeziehung (k) importiert werden.

2. Verfahren nach Anspruch 1, **dadurch gekennzeichnet,**
**dass** die Daten (d) vor einem Weiterleiten an eine Applikation (AP) oder einen betroffenen Dienst (D) des Netzes (D) dahingehend verifiziert werden, an welche betroffene Applikation (AP) oder welchen betroffenen Dienst (D) des Netzes (N) die Daten (d) weiterzuleiten sind.

3. Verfahren nach Anspruch 2, **dadurch gekennzeichnet,**
**dass** die Daten (d) vor einem Weiterleiten zwischengespeichert werden.

4. Verfahren nach einem der Ansprüche 1 bis 3, **dadurch gekennzeichnet,**
**dass** die Daten (d) vor dem Weiterleiten oder Zwischenspeichern auf Plausibilität verifiziert werden.

5. Verfahren nach einem der Ansprüche 1 bis 4, **dadurch gekennzeichnet,**
**dass** die Daten (d) zum Konfigurieren oder Administrieren der Applikationen (AP) und Dienste (D) des Netzes vorgesehen sind.

6. Verfahren nach einem der Ansprüche 1 bis 5, **dadurch gekennzeichnet,**
**dass** die Daten (d) zur Konfiguration der betroffenen Dienste (D) des Netzes (N) nit Hilfe geeigneter Dateiübertragungsprotokolle (TP) basierend auf den Daten (d) zugeordneter Verfahren weitergeleitet werden.

7. Verfahren nach einem der vorhergehenden Ansprüche, **dadurch gekennzeichnet,**
**dass** zu der als Vermittlungseinrichtung ausgebildeten zeitmultiplexorientierten Komponente (PBX) des Netzes (N) die Endgeräte (EG) eine Telefonverbindung herstellen und zu der als lokales Netz ausgebildeten, paketorientierten Komponente (LAN) des Netzes (N) die Endgeräte (EG) eine Datenverbindung mit Telefonfunktion herstellen.

8. Kommunikationssystem,
- bei dem ein Endgerät (EG) an eine zeitmultiplexorientierte Netzkomponente (PBX) angeschlossen ist, die mit einer paketorientierten Netzkomponente (LAN) verbunden ist, welche auf einen Controller (DC) für einen Zugriff auf eine endgerätespezifische Anpassung für Telefonanwendungen (TSP) geführt ist,
**dadurch gekennzeichnet, dass** die endgerätespezifische Anpassung für Telefonanwendungen (TSP) dazu eingerichtet ist,
- - eine Kommunikationsbeziehung (k) von dem Endgerät (EG) über eine Schnittstelle für Telefonanwendungen (TAPI) herzustellen,
- - die Berechtigung zum Importieren von Daten (d) dadurch zu verifizieren, dass eine zwischen dem Endgerät (EG) und der zeitmultiplexorientierten Netzkomponente (PBX) vorhandene Authentisierungsprozedur als Authentisierungsprozedur für den Zugang zu der endgerätespezifischen Anpassung für Telefonanwendungen (TSP) genutzt wird, und
- - die Caten (d) über die Kommunikationsbeziehung (k) zu einer betroffenen Applikation (AP) oder einem betroffenen Dienst (D) der paketorientierten Netzkomponente (LAN) zu importieren.

9. Kommunikationssystem nach Anspruch 8, **dadurch gekennzeichnet,**
**dass** die endgerätespezifische Anpassung (TSP) durch ein Prcgrammprodukt realisiert ist.

## Claims

1. Method for importing data (d) which are imported for an affected application (AP) or an affected service (D) of a packet-oriented network component (LAN), in which a terminal device (EG) is connected to a time-division multiplexed network component (PBX) that is connected to the packet-oriented network component (LAN), which is carried on a domain controller (DC) for access to a terminal-specific adaptation for telephony applications (TSP),
**characterized in that**
- via an interface for telephony adaptations (TAPI), the terminal device (EG) creates a communication link (k) to the terminal-specific adaptation for telephony applications (TSP), wherein for authorization for importing data (d) is verified **in that** an authentication procedure present between the terminal device (EG) and the time-division multiplexed network component (PBX) is used as the authentication procedure for access to the terminal-specific adaptation for telephony applications (TSP), and
- the data (d) are imported via the communication link (k).

2. Method according to claim 1, **characterized in that** before being passed on to an application (AP) or an affected service (D) of the network (N), the data (d) are verified to determine to which affected application (AP) or affected service (D) of the network (N) the data (d) are to be passed on.

3. Method according to claim 2, **characterized in that** the data (d) are temporarily stored before being passed on.

4. Method according to any one of claims 1 to 3, **characterized in that** the data (d) are verified for plausibility before being passed on or temporarily stored.

5. Method according to any one of claims 1 to 4, **characterized in that** the data (d) are provided for configuration or administration of the applications (AP) and services (D) of the network.

6. Method according to any one of claims 1 to 5, **characterized in that** the data (d) for configuration of the affected services (D) of the network (N) are passed on using suitable file transmission protocols (TP) based on processes associated with the data (d).

7. Method according to any one of the preceding claims, **characterized in that** the terminal devices (EG) create a telephony connection to the time-division multiplexed network component (PBX) of the network (N) formed as an exchange, and the terminal devices (EG) create a data connection with telephony function to the packet-oriented component (LAN) of the network (N) formed as a local network.

8. Communication system in which a terminal device (EG) is connected to a time-division multiplexed network component (PBX) that is connected to a packet-oriented network component (LAN), which is carried on a domain controller (DC) for access to a terminal-specific adaptation for telephony applications (TSP), **characterized in that** the terminal-specific adaptation for telephony applications (TSP) is configured to
- create a communication link (k) from the terminal device (EG) via an interface for telephony applications (TAPI),
- verify the authorization for importing data (d) **in that** an authentication procedure present between the terminal device (EG) and the time-division multiplexed network component (PBX) is used as the authentication procedure for access to the terminal-specific adaptation for telephony applications (TSP), and
- import the data (d) via the communication link (k) to an affected application (AP) or an affected service (D) of the packet-oriented network component (LAN).

9. Communication system according to claim 8, **characterized in that** the terminal-specific adaptation (TSP) is implemented by a program product.

## Revendications

1. Procédé d'importation de données (d), qui sont importées dans une application concernée (AP) ou dans un service concerné (D) d'un composant de réseau orienté paquets (LAN), dans le cadre duquel un appareil terminal (EG) est raccordé à un composant de réseau orienté multiplexage temporel (PBX) qui est relié au composant de réseau orienté paquets (LAN), lequel est amené sur un contrôleur (DC) en vue d'un accès à une adaptation spécifique à l'appareil terminal pour des applications téléphoniques (TSP),
**caractérisé en ce que**
- l'appareil terminal (EG) établit par le biais d'une interface pour des applications téléphoniques (TAPI) une relation de communication (k) à l'adaptation spécifique à l'appareil terminal pour des applications téléphoniques (TSP), l'autorisation d'importer des données (d) étant vérifiée par le fait qu'une procédure d'authentification présente entre l'appareil terminal (EG) et le composant de réseau orienté multiplexage temporel (PBX) est utilisée en tant que procédure d'authentification pour l'accès à l'adaptation spécifique à l'appareil terminal pour des applications téléphoniques (TSP), et
- les données (d) sont importées par le biais de la relation de communication (k).

2. Procédé selon la revendication 1, **caractérisé en ce que** les données (d), avant leur transmission à une application (AP) ou à un service concerné (D) du réseau (N), sont vérifiées au sujet de l'application concernée (AP) ou du service concerné (D) du réseau (N) à laquelle ou auquel les données (d) doivent être transmises.

3. Procédé selon la revendication 2, **caractérisé en ce que** les données (d) sont stockées provisoirement avant une transmission.

4. Procédé selon l'une quelconque des revendications 1 à 3, **caractérisé en ce que**
la plausibilité des données (d) est vérifiée avant la transmission ou le stockage provisoire.

5. Procédé selon l'une quelconque des revendications 1 à 4, **caractérisé en ce que**
les données (d) sont prévues pour la configuration ou l'administration des applications (AP) et des services (D) du réseau.

6. Procédé selon l'une quelconque des revendications 1 à 5, **caractérisé en ce que**,
les données (d) pour la configuration des services concernés (D) du réseau (N) sont transmises à l'aide de protocoles de transmission de données (TP) appropriés sur la base de procédés attribués aux données (d).

7. Procédé selon l'une quelconque des revendications précédentes, **caractérisé en ce que**,
les appareils terminaux (EG) établissent une liaison téléphonique au composant de réseau orienté multiplexage temporel (PBX), conçu en tant que dispositif de commutation, du réseau (N) et les appareils terminaux (EG) établissent une liaison de données avec fonction téléphonique au composant orienté paquet (LAN), conçu en tant que réseau local, du réseau (N).

8. Système de communication,
- dans lequel un appareil terminal (EG) est raccordé à un composant de réseau orienté multiplexage temporel (PBX) qui est relié à un composant de réseau orienté paquets (LAN), lequel est amené sur un contrôleur (DC) en vue d'un accès à une adaptation spécifique à l'appareil terminal pour des applications téléphoniques (TSP), **caractérisé en ce que** l'adaptation spécifique à l'appareil terminal pour des applications téléphoniques (TSP) est agencée pour
- - établir une relation de communication (k) par l'appareil terminal (EG) par le biais d'une interface pour des applications téléphoniques (TAPI),
- - vérifier l'autorisation d'importer des données (d) par le fait qu'une procédure d'authentification présente entre l'appareil terminal (EG) et le composant de réseau orienté multiplexage temporel (PBX) est utilisée en tant que procédure d'authentification pour l'accès à l'adaptation spécifique à l'appareil terminal pour des applications téléphoniques (TSP), et
- - importer les données (d) par le biais de la relation de communication (k) à une application concernée (AP) ou à un service concerné (D) du composant de réseau orienté paquets (LAN).

9. Système de communication selon la revendication 8, **caractérisé en ce que**
l'adaptation spécifique à l'appareil terminal (TSP) est réalisée par un produit-programme.
